Europäisches Patentamt

European Patent Office

Office européen des brevets

(11) Publication number: **0 134 412**
**B1**

# EUROPEAN PATENT SPECIFICATION

(45) Date of publication of patent specification: **14.01.87**

(51) Int. Cl.⁴: **G 11 B 5/72**

(21) Application number: **84106067.6**

(22) Date of filing: **28.05.84**

(54) Lubricated magnetic record disk and a process for making it.

(30) Priority: **14.07.83 US 513897**

(43) Date of publication of application:
**20.03.85 Bulletin 85/12**

(45) Publication of the grant of the patent:
**14.01.87 Bulletin 87/03**

(84) Designated Contracting States:
**DE FR GB**

(56) References cited:
EP-A-0 101 080
US-A-2 855 366
US-A-3 476 595
US-A-4 268 369
US-A-4 280 918

PATENT ABSTRACTS OF JAPAN, vol. 6, no.
212, 26 October 1982

(73) Proprietor: **International Business Machines
Corporation
Old Orchard Road
Armonk, N.Y. 10504 (US)**

(72) Inventor: **Homola, Andrew Marian
13430 Watsonville Road
Morgan Hill, CA 95037 (US)**
Inventor: **Sussner, Heinrich
16175 Rose Avenue
Monte Sereno, CA 95030 (US)**

(74) Representative: **Hobbs, Francis John
IBM United Kingdom Limited Intellectual
Property Department Hursley Park
Winchester Hampshire SO21 2JN (GB)**

Courier Press, Leamington Spa, England.

## Description

This invention relates to a lubricated magnetic record disk and a process for making such a disk.

US—A—4,280,918 discloses a process for coating individual magnetic particles with colloidal silica particles and subsequently applying the coated magnetic particles to a disk substrate to form a magnetic record disk.

US—A—2,885,366 discloses a process for forming a skin of amorphous silica on a particulate or fibrous material.

The invention seeks to provide an improved lubricated magnetic record disk and a process for making it.

A lubricated magnetic record disk is characterised, according to the invention, by an overcoat consisting of a monolayer of silica spheres about 7 nm in diameter permanently bound to the magnetic material of the disk and a skin-like film of amorphous silica about 2 to 13 nm thick formed on top of the monolayer of silica spheres.

The invention also provides a process for making a lubricated magnetic record disk comprising the successive steps of forming a monolayer of colloidal silica spheres about 7 nm in diameter on the magnetic material of the disk, dipping the disk into a 1% by weight solution of sodium silicate and maintaining the disk at 95°C for ten minutes in order to form a skin-like film of amorphous silica about 2 to 13 nm thick over the monolayer of colloidal silica spheres.

The lubricant is immobile (i.e. no spin-off), strong enough to protect the magnetic coating (no crashes) and thin enough to allow high density recording (no major spacing loss).

The present invention may be applied to virtually any magnetic disk record. Such records typically comprise a substrate such as silicon, glass, metal or plastic, and a magnetic medium which is usually a cobalt-chromium alloy or gamma $Fe_2O_3$. Usually the magnetic medium is on top of the substrate, and sometimes it is dispersed throughout a plastic binder.

In making the lubricated magnetic record disks, monodisperse spheres of colloidal silica are permanently bound to the disk surface by utilising the electrostatic attraction of oppositely charged surfaces in an aqueous system. Subsequent dehydration leaves a permanently bound monolayer of silica spheres about 7 nm in diameter. This part of the process is similar to that disclosed in US—A—4,280,918 mentioned above.

In the next step of the process the monolayer is strengthened by sealing it with at least one thin layer of amorphous silica.

### Example

A clean disk surface was brought into contact with a 5% by weight solution of colloid silica such as Ludox (registered trade mark) SM, 7 nm from duPont at pH 3.5. (The pH was adjusted with cationic ion exchange resin.). The disk was kept in the stirred dispersion for about five minutes. It was then removed from the dispersion and excess silica washed off with water. The disk was then placed in an oven at 150°C for 30 minutes. The disk was then dipped in a 1% by weight solution of sodium silicate and then heated at 95°C for ten minutes. This step generated a skin about 2.5 nm thick of amorphous silica, which served to fortify and seal the monolayer. It also served to inhibit corrosion. To enhance the wear resistance of the disk, the thickness of the skin can be increased by repeating the last step.

An overcoated magnetic record disk in accordance with the invention and in which the magnetic material is cobalt-chromium alloy or gamma $Fe_2O_3$, allows a transducer head to fly at 5 µm above it in a dry state. Such a disk has been used successfully in up to 18,000 start-stop cycles. No appreciable stiction has been encountered, and no significant head debris has been observed.

## Claims

1. A lubricated magnetic record disk characterised by the provision thereon of an overcoat consisting of a monolayer of silica spheres about 7 nm in diameter permanently bound to the magnetic material of the disk and a skin-like film of amorphous silica about 2 to 13 nm thick formed on top of the monolayer of silica spheres.

2. A disk as claimed in claim 1, having at least one further skin-like film of amorphous silica formed on top of the first-mentioned skin-like film of amorphous silica.

3. A process for making a lubricated magnetic record disk comprising the successive steps of forming a monolayer of colloidal silica spheres about 7 nm in diameter on the magnetic material of the disk, dipping the disk into a 1% by weight solution of sodium silicate and maintaining the disk at 95°C for ten minutes in order to form a skin-like film of amorphous silica about 2 to 13 nm thick over the monolayer of colloidal silica spheres.

4. A process as claimed in claim 3, further comprising forming at least one additional skin-like film of amorphous silica over the first-mentioned skin-like film of amorphous silica.

## Patentansprüche

1. Geschmierte Magnetplatte, dadurch gekennzeichnet, dass sie mit einer Schicht überzogen ist, welche aus einer Monoschicht von Siliziumdioxydkugeln von ca. 7 nm Durchmesser, die mit dem magnetischen Material der Platte fest verbunden sind, sowie einer hautähnlichen Schicht aus amorphem Siliziumdioxyd von ca. 2 bis 13 nm Dicke über der Monoschicht aus Siliciumdioxydkugeln besteht.

2. Platte nach Anspruch 1, dadurch gekennzeichnet, dass sie mindestens eine weitere hautähnliche Schicht aus amorphem über der ersten hautähnlichen Schicht aus amorphem Siliziumdioxyd aufweist.

3. Verfahren zur Herstellung einer geschmierten Magnetplatte, gekennzeichnet durch folgende aufeinanderfolgende Schritte:

— Bildung einer Monoschicht vom Kolloid-Siliziumdioxydkugeln von ca. 7 nm Durchmesser auf dem magnetischen Material der Platte;

— Eintauchen der Platte in eine Lösung aus 1 Gew.-% von Natriumsilikat; sowie

— gleichbleibende Erhitzung der Platte auf 95°C über zehn Minuten, so dass eine hautähnliche Schicht aus amorphem Siliziumdioxyd von ca. 2 bis 13 nm Dicke über der Monoschicht aus Kolloid Siliziumdioxydkugeln geformt wird.

4. Verfahren nach Anspruch 3, dadurch gekennzeichnet, dass mindestens eine weitere hautähnliche Schicht aus amorphem Siliziumdioxyd über der ersten hautähnlichen Schicht aus amorphem Siliziumdioxyd gebildet wird.

**Revendications**

1. Disque d'enregistrement magnétique lubrifié caractérisé en ce qu'il est prévu sur celui-ci un revêtement constitué d'une couche monoparticulaire de sphères de silice d'environ 7 nm de diamètre liées de manière permanente à la matière magnétique du disque et une pellicule de silica amorphe, analogue à une peau, d'environ 2 à 13 nm d'épaisseur formée par dessus la couche monoparticulaire de sphères de silice.

2. Disque selon la revendication 1, ayant au moins une autre pellicule de silice amorphe, analogue à une peau, formée par dessus ladite première pellicule de silice amorphe, analogue à une peau.

3. Procédé pour fabriquer un disque d'enregistrement magnétique lubrifié comprenant les stades successifs de formation d'une couche monoparticulaire de sphères de silice colloïdale d'environ 7 nm de diamètre sur la matière magnétique du disque, d'immersion du disque dans une solution à 1% en poids de silicate de sodium et de maintien du disque à 95°C pendant dix minutes pour former une pellicule de silice amorphe, analogue à une peau, d'environ 2 à 13 nm d'épaisseur sur la couche monoparticulaire de sphères de silica colloïdale.

4. Procédé selon la revendication 3, comprenant en outre la formation d'au moins une pellicule supplémentaire de silice amorphe, analogue à une peau, sur la première pellicule mentionnée de silice amorphe, analogue à une peau.